# NEUE EUROPÄISCHE PATENTSCHRIFT

(11) **EP 0 456 853 B2**
(45) Veröffentlichungstag und Bekanntmachung des Hinweises auf die Entscheidung über den Einspruch: **05.09.2001**
(45) Hinweis auf die Patenterteilung: 07.09.1994
(21) Anmeldenummer: 90109106.6
(22) Anmeldetag: 15.05.1990
(51) Int. Cl.: B60R 22/46, B60R 21/32

(54) **Ansteuermechanismus für Rückstrammeinrichtungen**
Mechanical control device for tensioning devices
Mécanisme de commande pour dispositifs tendeurs

(43) Veröffentlichungstag der Anmeldung: 21.11.1991
(73) Patentinhaber: TRW Occupant Restraint Systems GmbH & Co. KG, 73551 Alfdorf (DE)
(72) Erfinder: Föhl, Artur, W-7060 Schorndorf (DE)
(74) Vertreter: Degwert, Hartmut, Dipl.-Phys.

(56) Entgegenhaltungen:
- FR-A- 2 374 188
- FR-A- 2 374 188
- FR-A- 2 559 582
- FR-A- 2 559 582
- GB-A- 2 220 128
- US-A- 3 848 695
- US-A- 4 264 089

## Beschreibung

Die Erfindung betrifft einen Ansteuermechanismus für Rückstrammeinrichtungen eines Sicherheitsgurt-Rückhaltesystems oder für Gassack-Rückhaltesysteme in Fahrzeugen gemäß dem Oberbegriff des Patentanspruchs 1 bzw. 6.

Ein solcher Ansteuermechanismus kann mit der Rückstrammeinrichtung und eventuell auch mit einem Gurtaufroller zu einer kompakten Baugruppe integriert werden, die als fertiges Modul in einem Fahrzeug eingebaut wird. Der Ansteuermechanismus beinhaltet einen mechanischen fahrzeugsensitiven Sensor, durch dessen Auslösung die Rückstrammmeinrichtung aktiviert wird.

Ein solcher Sensor spricht aber auch auf Stöße an, die einen bestimmten Schwellwert überschreiten. Um zu vermeiden, daß gelegentlich auftretende Stöße bei der Handhabung des einbaufertigen Moduls zu einer Aktivierung der Rückhalte- bzw. Rückstrammeinrichtung führen, weist ein Ansteuermechanismus, der aus der FR-A-2 559 582 bekannt ist, eine Sperreinrichtung auf, durch die der Sensor in seinem Bereitschaftszustand gesichert wird, bis das Modul im Fahrzeug montiert ist. Bei diesem Ansteuermechanismus wird das Gehäuse des Ansteuermechanismus bei der Montage im Fahrzeug auf einen fahrzeugfesten Stift aufgesetzt, wobei innenliegende Funktionsteile aus einem Sperrzustand in einen Freigabezustand für den Sensor umgeschaltet werden. Die Umschaltung ist aber nicht reversibel, so daß der Sensor bei einer eventuellen Demontage entsichert bleibt, und die Montagemöglichkeiten sind insoweit eingeschränkt, als ein passendes stiftförmiges Element am Fahrzeug vorhanden oder daran montierbar sein muß.

Auch aus der FR-A-2 374 188 ist ein Ansteuermechanismus bekannt, der einen mechanischen fahrzeugsensitiven Sensor beinhaltet, durch dessen Auslösung eine Rückhalteeinrichtung aktiviert wird. Bei diesem Ansteuermechanismus wird zur Sperrung des Sensors ein am Gehäuse des Ansteuermechanismus schwenkbar gelagerter Tasthebel verwendet. Für die Sperrfunktion greift ein Ende des Tasthebels unmittelbar in eine Bohrung in einem Sensorelement ein, was eine relativ große Durchgangsbohrung im Gehäuse voraussetzt. Das Sensorgehäuse ist daher nicht dicht, so daß Schmutzpartikel in das Gehäuse eindringen können, was nachteilig für die Funktion des Sensors ist.

Aus der US-A-3 848 695 ist ein Ansteuermechanismus gemäß dem Oberbegriff des Patentanspruchs 1 bzw. 6. Im Gegensatz zu den aus den o.g. Druckschriften bekannten Ansteuermechanismen ist bei diesem Ansteuermechanismus ein elektromechanischer Sensor für die Auslösung einer Rückhalteeinrichtung vorgesehen. Im Gehäuse ist gleitverschiebbar ein Taststift geführt, der einen elektrischen Schalter betätigt. Im montierten Zustand des Ansteuermechanismus ist der Taststift in das Gehäuse hineinverschoben, wodurch der Schalter geschlossen wird und der Ansteuermechanismus betriebsbereit ist.

Ausgehend von diesem Stand der Technik besteht die Aufgabe der Erfindung darin, einen Ansteuermechanismus zu schaffen, der auf rein mechanischem Wege eine reversible Sperrung auf präzise und zuverlässige Weise ermöglicht.

Diese Aufgabe wird bei einem Ansteuermechanismus der im Oberbegriff des Patentanspruchs 1 bzw. Patentanspruchs 6 genannten Art durch die kennzeichnenden Merkmale gelöst.

Da das Gehäuse des Ansteuermechanismus direkt an einer Fläche des Fahrzeugaufbaus befestigt wird, wirkt das Steuerelement direkt als Taststift, indem es bei der Montage des Gehäuses im Fahrzeug an einer Fläche des Fahrzeugaufbaus zur Anlage kommt. Dabei wird der anfangs herausragende Teil des Taststiftes in die Bohrung eingedrückt.

Weitere Merkmale und Vorteile der Erfindung ergeben sich aus der folgenden Beschreibung mehrerer Ausführungsformen und aus der Zeichnung, auf die Bezug genommen wird. In der Zeichnung zeigen:
- Fig. 1: eine teilweise im Schnitt gezeigte Ansicht einer Ausführungsform, bei welcher eine Rückstrammeinrichtung, ein Ansteuermechanismus und ein Gurtaufroller zu einer Baugruppe integriert sind;
- Fg. 2: einen Teilschnitt des Ansteuermechanismus bei der in Fig. 1 gezeigten Ausführungsform;
- Fig. 3 bis 6: Bauformen eines Austeuermechanismus mit Tasthebel, die nicht von der Erfindung Gebrauch machen;
- Fg. 7 bis 10: eine Ausführungsform eines Ansteuermechanismus mit translationsverschiebbarer Trägheitsmasse in zwei Schnittansichten, einer Draufsicht und einer Explosivansicht; und
- Fig. 11 bis 14: eine Ausführungsform eines Ansteuermechanismus mit verschwenkbarer Trägheitsmasse in drei Schnittansichten und einer Explosivdarstellung.

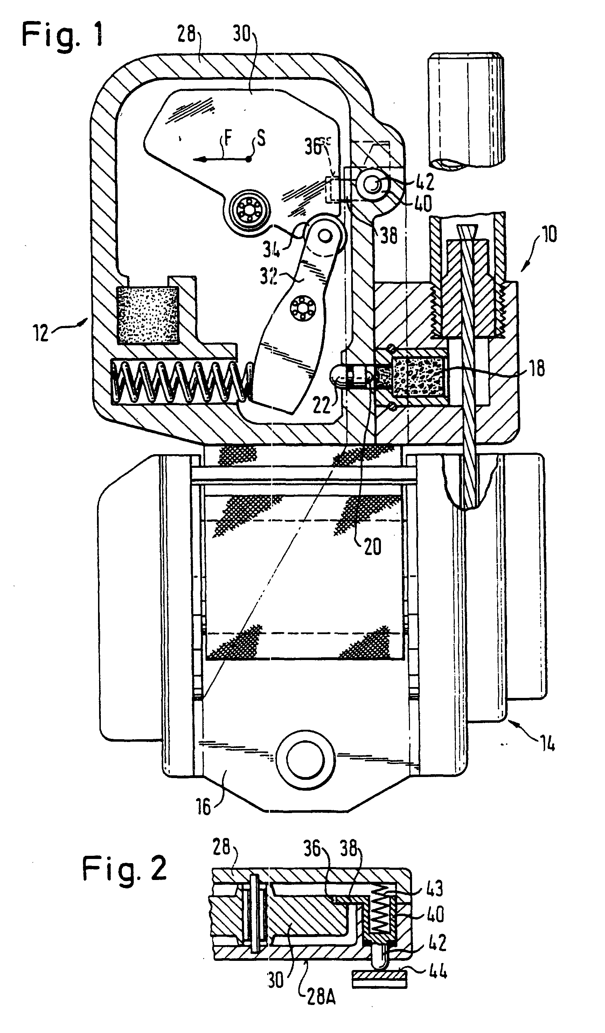

Bei der in Fig. 1 gezeigten Ausführungsform sind eine pyrotechnische Rückstrammeinrichtung, die allgemein mit 10 bezeichnet ist, der ihr zugeordnete Ansteuermechanismus 12 und ein Sicherheitsgurtaufroller 14 zu einer Baugruppe integriert. Die Montage dieser Baugruppe erfolgt mittels des lastaufnehmenden Gehäuses des Gurtaufrollers 14, der zu diesem Zweck an seinem Gehäuse mit einem Befestigungsflansch 16 versehen ist. Die Rückstrammeinrichtung 10 besteht in an sich bekannter Weise aus einem pyrotechnischen Kolben/Zylinder-Linearantrieb, dessen Kolbenbewegung durch ein Zugseil auf eine Seilscheibe übertragen wird, welche mit der Gurtspule des Gurtaufrollers 14 kuppelbar ist. Die pyrotechnische Ladung 18 der Rückstrammeinrichtung wird mittels eines Schlagzünders 20 aktiviert, der seinerseits durch einen Schlagbolzen 22 ausgelöst wird. Der Schlagbolzen 22 ist in einer Bohrung eines Gehäuses 28 des Ansteuermechanismus 12 verschiebbar gelagert. In diesem Gehäuse 28 ist ferner eine fahrzeugsensitive Trägheitsmasse 30 leichtgängig verschwenkbar gelagert. Ein federbeaufschlagtes Schlagstück 32 in Form eines schwenkbar gelagerten zweiarmigen Hebels stützt sich mit einer Rolle 34 in einer konkaven Ausnehmung der Trägheitsmasse 30 ab. In dem in Fig. 1 gezeigten Bereitschaftszustand liegt der eine Arm des Schlagstücks 32 dem in das Gehäuse hineinragenden Kopf des Schlagbolzens 22 im Abstand gegenüber. Die Gestalt der durch die konkave Ausnehmung an der Trägheitsmasse 30 gebildeten Steuerkurve bestimmt die Auslöseschwelle, bei welcher die Trägheitsmasse 30 unter der Einwirkung von an ihrem Schwerpunkt S angreifenden Verzögerungskräften in Richtung eines Pfeiles F entgegen dem Uhrzeigersinn verschwenkt wird, um das Schlagstück 32 freizugeben, damit dieses unter der Wirkung der Federbeaufschlagung zum Schlagbolzen 22 hin beschleunigt wird, bis es auf dem Schlagbolzen auftrifft und diesen in den Schlagzünder 20 eintreibt.

Die Trägheitsmasse 30 ist mit einer Aussparung 36 in ihrer einen Hauptfläche versehen, die parallel zur Schwenkebene der Trägheitsmasse ist. Diese Ausnehmung 36 ist in ihrer Gestalt passend zu einem Sperrfortsatz 38 eines Steuerelementes 40 ausgebildet, so daß dieser Sperrfortsatz 38 in die Aussparung 36 eingreifen kann, um die Trägheitsmasse 30 in ihrer in Fig. 1 gezeigten Bereitschaftsstellung zu sichern. Das Steuerelement 40 ist ein in einer Bohrung des Gehäuses 28 gleitverschiebbar geführter Hohlstift, von dessen innerem Ende der Sperrfortsatz 38 senkrecht absteht. Die Höhlung des Steuerelements 40 nimmt eine Druckfeder 43 auf, die sich an der gegenüberliegenden Innenwandung des Gehäuses 28 abstützt und das Sperrelement in solchem Sinne beaufschlagt, daß der Sperrfortsatz 38 mit der Aussparung 36 in Eingriff gehalten wird. In diesem Zustand ragt ein verjüngtes Ende des Steuerelementes 40, welches einen Taststift 42 bildet, aus der mit einer Stufe versehenen Bohrung des Gehäuses 28 nach außen und überragt mit seinem freien Ende eine Außenfläche 28A des Gehäuses 28. Diese Fläche 28A wird bei der Montage der Baugruppe mindestens teilweise zur Anlage an einer gegenüberliegenden Möntagefläche des Fahrzeugaufbaus gebracht. Diese Montagefläche ist in Fig. 2 schematisch bei 44 angedeutet. Die Fig. 2 zeigt den Zustand zu Beginn der Montage: Der mit dem Steuerelement 40 einstückig ausgebildete Taststift 42 ist mit seiner Tastfläche bereits in Anlage an der gegenüberliegenden Montagefläche 44 des Fahrzeugaufbaus. Mit zunehmender Annäherung der Flächen 28A und 44 aneinander wird der Taststift 42 in das Gehäuse 28 eingedrückt, so daß der Sperrfortsatz 38 sich aus der Aussparung 36 herausbewegt und schließlich die Trägheitsmasse 30 freigibt, so daß der Ansteuermechanismus entsichert ist. Bei einer etwaigen Demontage der Baugruppe wird der Taststift 42 durch die Druckfeder 43 wieder auswärts gedrückt, so daß die Trägheitsmasse 30 erneut gesichert wird.

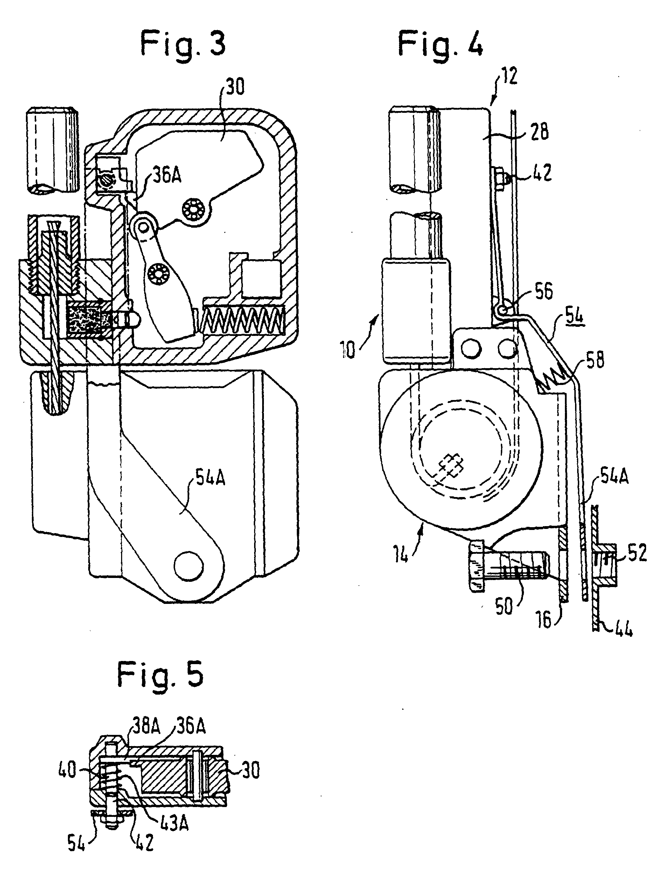

Die Ausführungsform nach den Fig. 3 bis 5 unterscheidet sich von der nach den Fig. 1 und 2 nur durch die Mittel, mit welchen die Sicherung und Entsicherung der Trägheitsmasse 30 erfolgt. Nur diese Mittel werden daher hier beschrieben.

Die Befestigung der aus Rückstrammeinrichtung 10, Ansteuermechanismus 12 und Gurtaufroller 14 bestehenden Baugruppe an der Montagefläche 44 des Fahrzeugaufbaus erfolgt mittels einer Montageschraube 50, die durch eine Öffnung des Montageflansches 16 des Gurtaufrollers 14 geführt und in eine Gewindebohrung 52 am Fahrzeugaufbau eingeschraubt wird. Am Gehäuse 28 des Ansteuermechanismus 12 ist ein zweiarmiger Tasthebel 54 auf einem Lagerstift 56 schwenkbar gelagert. Der eine Arm des Tasthebels 54 ist an seinem freien Ende gegabelt und greift unter das aus dem Gehäuse 28 herausragende, verbreiterte oder mit einer aufgeschraubten Schraubmutter versehene Ende des stiftförmigen Steuerelementes 40. Der andere Hebelarm des Tasthebels 54 besitzt ein abgekröpftes flaches Ende in Form einer Fahne 54A, die mit einem Durchgangsloch für die Montageschraube 50 versehen ist. Durch eine Druckfeder 58 wird diese Fahne 54A von dem Montageflansch 16 weggedrückt, solange die Baugruppe nicht an der Montagefläche 44 des Fahrzeugaufbaus angeschraubt ist. Bei der Montage befindet sich die Fahne 54A zwischen dem Montageflansch 16 und der Montagefläche 44, so daß beim Festziehen der Montageschraube 50 die Fahne 54A an die ihr gegenüberliegende Fläche des Montageflansches 16 angedrückt wird. Gleichzeitig wird über das Ende des anderen Hebelarmes des Tasthebels 54 ein Zug auf das äußere Ende des Steuerelementes 40 ausgeübt. Abweichend von der Ausführungsform nach den Fig. 1 und 2 ist die Trägheitsmasse 30 mit einer Gestaltung in Form einer Sperrnase 36A versehen.

Das stiftförmige Steuerelement 40 greift in dem in den Fig. 3 und 5 gezeigten Zustand mit seinem senkrecht abstehenden Sperrfortsatz 38A hinter die Sperrnase 36A, um die Trägheitsmasse 30 zu sichern. Bei Zugausübung auf das Steuerelement 40 über den Tasthebel 54 löst sich der Sperrfortsatz 38A entgegen der Wirkung einer Druckfeder 43A von der Sperrnase 36A, um die Trägheitsmasse 30 freizugeben.

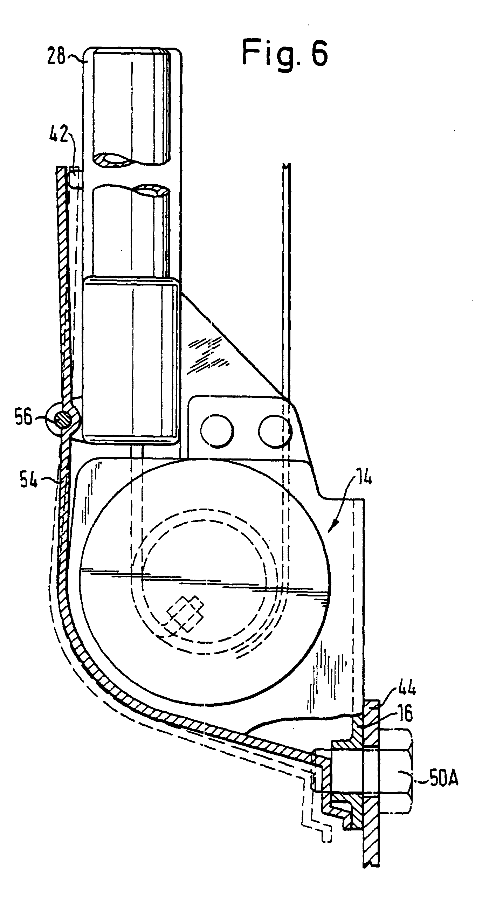

Die Fig. 6 zeigt eine Variante der in den Fig. 3 bis 5 gezeigten Ausführungform. Bei dieser Variante stützt sich das aus dem Gehäuse 28 des Ansteuermechanismus herausragende Ende des als Taststift 42 ausgebildeten Steuerelements an dem freien Ende des einen Hebelarms des zweiarmigen Tasthebels 54 ab; der andere Hebelarm des Tasthebels 54 ist entsprechend der Außenkontur des Gurtaufrollers 14 gekrümmt und bis in die Nähe von dessen Montageflansch 16 herangeführt. Es bildet dort einen Druckansatz für das Ende einer Montageschraube 50A, die in eine Gewindebohrung des Montageflansches 16 eingeschraubt ist und mit ihrem freien Ende aus dieser Gewindebohrung herausragt. In Fig. 6 ist die Stellung des Tasthebels 54 vor der Montage mit durchgehenden Linien dargestellt; gestrichelt ist die Stellung nach der Montage gezeigt. Nach der Montage ist der Tasthebel 54 im Uhrzeigersinn verschwenkt, so daß er den Taststift 42 zum Inneren des Gehäuses 28 eindrückt. Bei dieser Ausführungsform wird ähnlich wie bei der Ausführungsform nach den Fig. 1 und 2 ein Taststift 42 verwendet, der aus dem Gehäuse 28 herausragt, jedoch erfolgt die Betätigung dieses Taststiftes nicht unmittelbar, sondern indirekt über den Tasthebel 54.

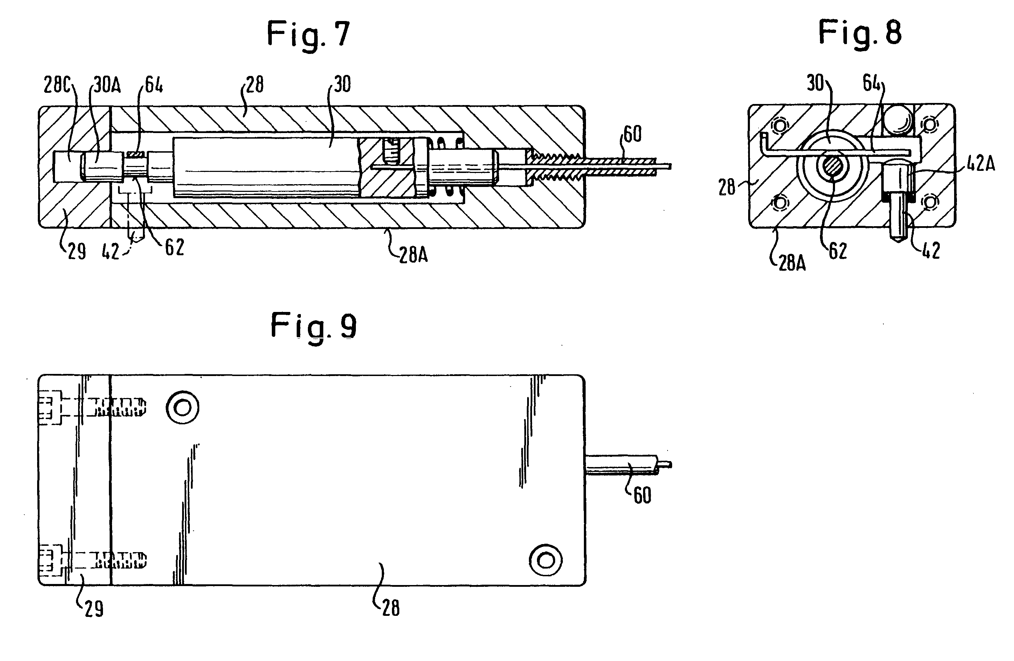

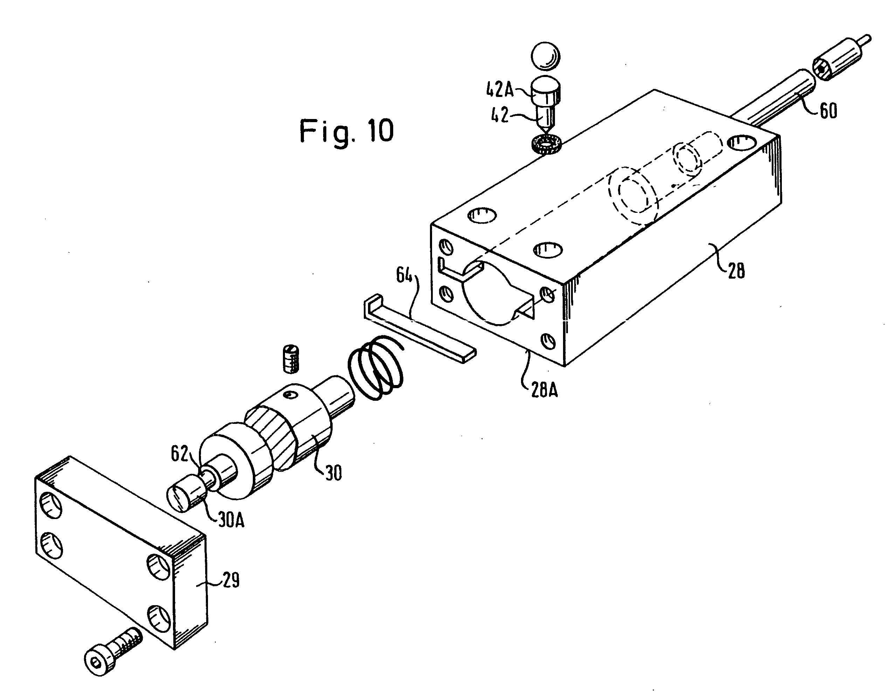

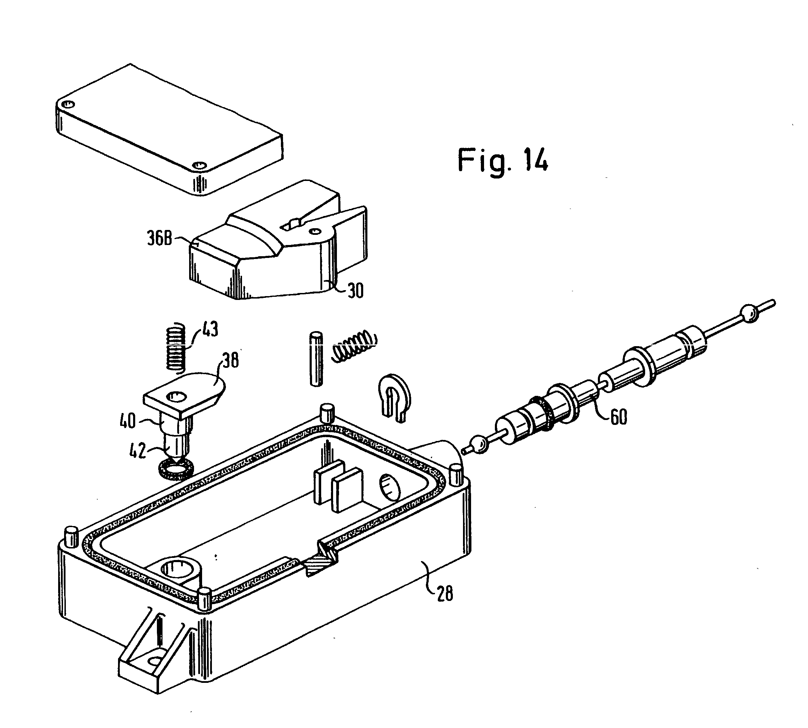

Die Fig. 7 bis 14 zeigen zwei Varianten eines Ansteuermechanismus, der getrennt von der Rückstrammeinrichtung am Fahrzeugaufbau befestigt wird. In beiden Fällen ist die Trägheitsmasse 30 über einen Seilzug 60 an die (nicht gezeigte) Rückstrammeinrichtung angeschlossen.

Bei der Ausführungsform nach den Fig. 7 bis 10 ist die fahrzeugsensitive Trägheitsmasse 30 im Gehäuse 28 translationsverschiebbar geführt. In einem seitlich aufgesetzten Gehäusedeckel 29 ist eine Sackbohrung 28C angebracht, in der ein zylindrischer Führungszapfen 30A der Trägheitsmasse 30 gleitverschiebbar geführt ist. Der Führungszapfen 30A ist mit einer radial einspringenden Ringnut 62 versehen, in die der mittlere Bereich einer fest im Gehäuse 28 eingespannten Blattfeder 64 eingreift. Das freie Ende dieser Blattfeder 64 liegt dem inneren, zylindrischen Kopfstück 42A eines Taststiftes 42 in geringem Abstand gegenüber, welcher aus einer Montagefläche 28A des Gehäuses 28 herausragt.

In dem Zustand, der in den Fig. 7 und 8 gezeigt ist, greift die Blattfeder 64 in die Ringnut 62 ein, um die Trägheitsmasse 30 in ihrer Bereitschaftsstellung zu sichern. Wenn bei der Montage des Gehäuses 28 an einer Fläche des Fahrzeugaufbaus die Montagefläche 28A an die Gegenfläche herangebracht wird, kommt zunächst der Taststift 42 mit dieser Gegenfläche in Berührung, woraufhin schließlich der Taststift 42 in das Innere des Gehäuses 28 hineingedrückt wird und mit seinem zylindrischen Kopfstück 42A das Ende der Blattfeder 64 erfaßt, um diese aus der Ringnut 62 herauszubewegen, so daß die Trägheitsmasse 30 nunmehr ungesichert ist.

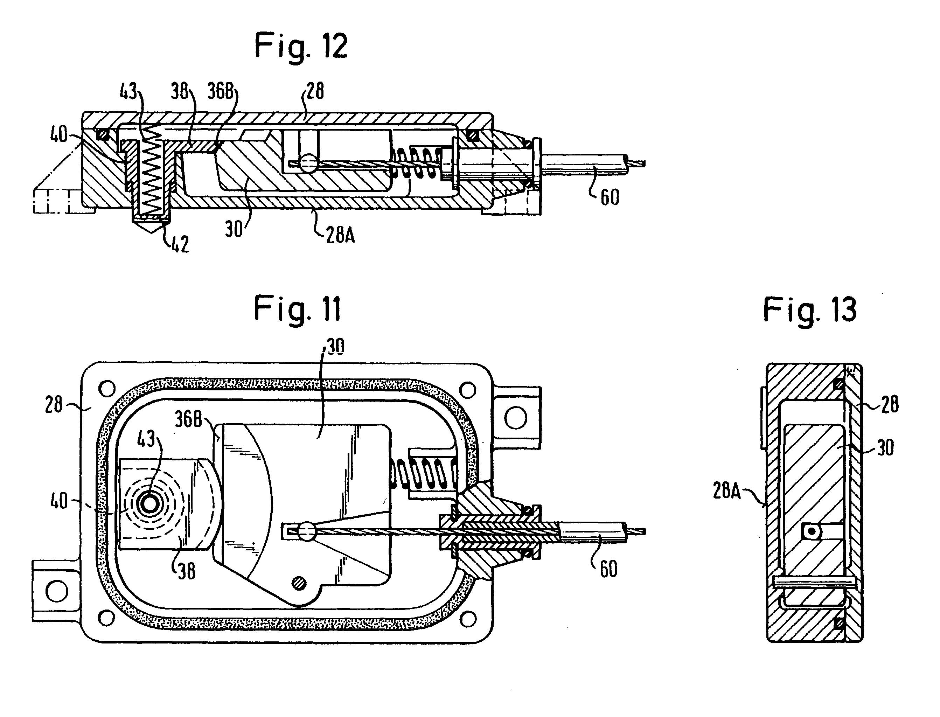

Bei der Ausführungsform nach den Fig. 11 bis 14 ist die Trägheitsmasse 30 im Gehäuse 28 schwenkbar gelagert. Analog der Ausführungsform nach den Fig. 1 und 2 ist das Steuerelement 40 als hohler Stift ausgebildet, dessen Höhlung eine Druckfeder 43 aufnimmt, die sich auf der einen Innenfläche des Gehäuses 28 abstützt. Das als Taststift 42 ausgebildete äußere Ende des Steuerelementes 40 ragt aus der Montagefläche 28A des Gehäuses 28 heraus. Gleichfalls einteilig mit dem Steuerelement 40 ausgebildet ist der senkrecht von seinem inneren Ende abstehende Sperrfortsatz 38, der an seinem freien Ende mit einer entsprechenden Gestaltung der Trägheitsmasse 30 zusammenwirkt. Diese Gestaltung besitzt hier die Form einer Rampe 36B. Bei der in den Fig. 11 und 12 gezeigten Sicherungsstellung ist das freie Ende des Sperrfortsatzes 38 mit dieser Rampe 36B in Eingriff und hält die Trägheitsmasse 30 in ihrer gesicherten Stellung. Bei der Montage des Gehäuses 28 an einer Gegenfläche des Fahrzeugaufbaus wird der Taststift 42 eingedrückt, wodurch der Sperrfortsatz 38 von der Rampe 36B freikommt und die Trägheitsmasse 30 entsichert.

Der Taststift 42 ist an seinem freien Ende kegelförmig zugespitzt. Die Druckfeder 43 ist relativ hart bemessen, so daß ein Eindrücken des Taststiftes 42 von Hand sehr schmerzhaft ist und daher praktisch ausgeschlossen werden kann. Eine versehentliche Entsicherung bei der Handhabung des noch nicht montierten Ansteuermechanismus ist daher nicht zu befürchten.

## Patentansprüche

1. Ansteuermechanismus für Rückstrammeinrichtungen (10) eines Sicherheitsgurt-Rückhaltesystems oder für Gassack-Rückhaltesysteme in Fahrzeugen, mit in einem Gehäuse (28) angeordneten Funktionsteilen, die eine Sperreinrichtung (36, 38) zur Sperrung der Ansteuerfunktion umfassen, wobei diese Sperreinrichtung (36, 38) zwischen einem Sperrzustand und einem Freigabezustand umsteuerbar ist und zur Umsteuerung der Sperreinrichtung zwischen ihren zwei Zuständen ein stiftförmiges Steuerelement (40) durch die Wandung des Gehäuses (28) in dieses hineinragt und bei Annäherung des Gehäuses (28) an ein Teil des Fahrzeugaufbaus bei der Montage des Gehäuses an diesem Teil des Fahrzeugaufbaus einen Betätigungsschub zur Umsteuerung in den Freigabezustand ausführt, wobei das stiftförmige Steuerelement (40) in einer Bohrung des Gehäuses (28) gleitverschiebbar gelagert ist und mit seinem freien Ende (42) auf der Außenfläche des Gehäuses (28) herausragt, wobei dieses freie Ende (42) direkt als Taststift wirkt, **dadurch gekennzeichnet, daß** die Sperreinrichtung (36, 38) ein im Inneren des Gehäuses angeordnetes Sperrelement (38) enthält, das im Sperrzustand an einer auf der Außenfläche einer fahrzeugsensitiven Trägheitsmasse (30) gebildeten Aussparung (36) oder Rampe (36B) angreift, und daß das Sperrelement (38) durch eine Verstellung in der Richtung des Betätigungsschubes des Steuerelements (40) aus dem Sperrzustand in den Freigabezustand überführt wird, in dem es außerhalb des Bewegungsweges der der Aussparung (36) oder Rampe (36B) gehalten wird.

2. Ansteuermechanismus nach Anspruch 1, **dadurch gekennzeichnet, daß** das Sperrelement (38) durch Federkraft in seine Sperrstellung vorbelastet ist.

3. Ansteuermechanismus nach Anspruch 1, **dadurch gekennzeichnet, daß** das Sperrelement (38) einteilig mit dem Steuerelement (40) ausgebildet ist.

4. Ansteuerrnechanismus nach einem der vorstehenden Ansprüche, **dadurch gekennzeichnet**, daß die Außenfläche (28A) des Gehäuses, auf der der Taststift (42) herausragt, bei dessen Montage im Fahrzeug an dem Teil des Fahrzeugaufbaus zur Anlage kommt, wobei der anfangs herausragende Teil des Taststiftes (42) in die Bohrung eingedrückt wird.

5. Ansteuermechanismus nach einem der Ansprüche 1 bis 4, **dadurch gekennzeichnet**, daß in dem Gehäuse (28) die fahrzeugsensitive Trägheitsmasse (30) verschwenkbar gelagert und die Rampe (36B) zur Ebene der Schwenkbewegung orientiert ist.

6. Ansteuermechanismus für Rückstrammeinrichtungen (10) eines Sicherheitsgurt-Rückhaltesystems oder für Gassack-Rückhaltesysteme in Fahrzeugen, mit in einem Gehäuse (28) angeordneten Funktionsteilen, die eine Sperreinrichtung (62, 64) zur Sperrung der Ansteuerfunktion umfassen, wobei diese Sperreinrichtung (62, 64) zwischen einem Sperrzustand und einem Freigabezustand umsteuerbar ist und zur Umsteuerung der Sperreinrichtung zwischen ihren zwei Zuständen ein stiftförmiges Steuerelement (40) durch die Wandung des Gehäuses (28) in dieses hineinragt und bei Annäherang des Gehäuses (28) an ein Teil des Fahrzeugaufbaus bei der Montage des Gehäuses an diesem Teil des Fahrzeugaufbaus einen Betätigungshub zur Umsteuerung in den Freigabezustand ausführt, wobei das stiftförmige Steuerelement (40) in einer Bohrung des Gehäuses (28) gleitverschiebbar gelagert ist und mit seinem freien Ende (42) auf der Außenfläche des Gehäuses (28) herausragt, wobei dieses freie Ende (42) direkt als Taststift wirkt, **dadurch gekennzeichnet, daß** die Sperreinrichtung (62, 64) ein im Inneren des Gehäuses angeordnetes Sperrelement (64) enthält, das im Sperrzustand an einer auf der Außenfläche einer fahrzeugsensitiven Trägheitsmasse (30) gebildeten Gestaltung (62) angreift, daß das Sperrelement (64) durch eine Verstellung in der Richtung des Betätigungsschubes des Steuerelements (40) aus dem Sperrzustand in den Freigabezustand überführt wird, in dem es außerhalb des Bewegungsweges der Gestaltung (62) gehalten wird, und daß in dem Gehäuse (28) die fahrzeugsensitive Trägheitsmasse (30) translationsverschiebbar geführt und mit der quer zur Richtung der Translationsverschiebung orientierten Gestaltung (62) versehen ist, an der das Sperrelement (64) angreift.

7. Ansteuermechanismus nach Anspruch 6, **dadurch gekennzeichnet, daß** das Sperrelement eine flache Blattfeder (64) ist, die im Gehäuse (28) an ihrem einen Ende eingespannt ist mit ihrem anderen Ende in eine Nut (62) der Trägheitsmasse (30) eingreift.

## Claims

1. A trigger mechanism for tensioning means (10) of a safety belt restraint system or for gas bag restraint systems in vehicles, comprising functional components which are arranged in a housing (28) and which include a blocking means (36, 38) for blocking the trigger function, said blocking means (36, 38) being switchable between a blocking state and a release state and for switching the blocking means between its two states a pin-shaped control element (40) extends through the wall of the housing (28) into the housing and upon approach of the housing (28) towards a part of the vehicle bodywork during assembly of the housing on said part of the vehicle bodywork executes an actuating thrust for switching into the release state, the pin-shaped control element (40) being mounted for sliding displacement in a bore of the housing (28) and with its free end (42) projecting on the outer surface of the housing (28), said free end (42) directly acting as a sensing pin, **characterized in that** the blocking means (36, 38) includes a blocking element (38) which is arranged in the interior of the housing and which in the blocking state engages a recess (36) or ramp (36B) formed on the outer surface of a vehicle-sensitive inertia mass (30), and that by a shift in the direction of the actuating thrust of the control element (40) the blocking element (38) is operated from the blocking state into the release state in which it is held out of the path of motion of the recess (36) or ramp (36B).

2. The trigger mechanism according to claim 1, **characterized in that** the blocking element (38) is biased into its blocking position by spring force.

3. The trigger mechanism according to claim 1, **characterized in that** the blocking element (38) is designed in one piece with the control element (40).

4. The trigger mechanism according to any of the preceding claims, **characterized in that** the outer surface (28A) of the housing on which the sensing pin (42) projects comes to bear on the part of the vehicle bodywork during mounting of the sensing pin in the vehicle, the initially projecting portion of the sensing pin (42) being pressed into the bore.

5. The trigger mechanism according to any of claims 1 to 4, **characterized in that** the vehicle-sensitive inertia mass (30) is pivotally mounted in the housing (28) and the ramp (36B) is orientated transversely to the plane of the pivoting motion.

6. A trigger mechanism for tensioning means (10) of a safety belt restraint system or for gas bag restraint systems in vehicles, comprising functional components which are arranged in a housing (28) and which include a blocking means (62, 64) for blocking the trigger function, said blocking means (62, 64) being switchable between a blocking state and a release state and for switching the blocking means between its two states a pin-shaped control element (40) extends through the wall of the housing (28) into the housing and upon approach of the housing (28) towards a part of the vehicle bodywork during assembly of the housing on said part of the vehicle bodywork executes an actuating stroke for switching into the release state, the pin-shaped control element (40) being mounted for sliding displacement in a bore of the housing (28) and with its free end (42) projecting on the outer surface of the housing (28), said free end (42) directly acting as a sensing pin, **characterized in that** the blocking means (62, 64) includes a blocking element (64) which is arranged in the interior of the housing and which in the blocking state engages a configuration (62) formed on the outer surface of a vehicle-sensitive inertia mass (30), that by a shift in the direction of the actuating stroke of the control element (40) the blocking element (64) is operated from the blocking state into the release state in which it is held out of the path of motion of the configuration (62), and that the vehicle-sensitive inertia mass (30) is guided in the housing (28) for translational displacement and is provided with the configuration (62) which is orientated transversely to the direction of the translational displacement and which is engaged by the blocking element (64).

7. The trigger mechanism according to claim 6, **characterized in that** the blocking element is a flat leaf spring (64) which is clamped in the housing (28) at its one end and with its other end engages into a groove (62) of the inertia mass (30).

## Revendications

1. Mécanisme d'amorçage pour dispositifs de rétraction (10) d'un système de retenue à ceinture de sécurité ou pour des systèmes de retenue à coussin à gaz, comportant des pièces fonctionnelles agencées dans un boîtier (28), qui comprennent un dispositif de blocage (36, 38) pour bloquer la fonction de commande, ce dispositif de blocage (36, 38) étant inversable entre un état de blocage et un état de libération, et pour inverser le dispositif de blocage entre ses deux états, un élément de commande (40) en forme de broche faisant saillie à travers la cloison du boîtier (28) jusque dans ce dernier et exécutant une poussée d'actionnement pour l'inversion clans l'état de libération lorsque le boîtier (28) se rapproche d'une partie de la carrosserie du véhicule lors du montage du boîtier sur cette partie de la carrosserie du véhicule, l'élément de commande (40) en forme de broche étant monté coulissant dans un perçage du boîtier (28) et faisant saillie avec son extrémité libre (42) sur la surface extérieure du boîtier (28), cette extrémité libre (42) agissant directement en tant que broche palpeuse, **caractérisé en ce que** le dispositif de blocage (36, 38) contient un élément de blocage (38) agencé à l'intérieur du boîtier, lequel s'engage, à l'état bloqué, dans un évidement (36) ou une rampe (36B) formé(e) sur la surface extérieure d'une masse d'inertie (30) sensible au véhicule, et en ce que par un déplacement en direction de la poussée d'actionnement de l'élément de commande (40), l'élément de blocage (38) est amené hors de l'état de blocage dans l'état de libération dans lequel il est maintenu en dehors de la course de mouvement de l'évidement (36) ou de la rampe (36B).

2. Mécanisme d'amorçage selon la revendication 1, **caractérisé en ce que** l'élément de blocage (38) est précontraint dans sa position de blocage par une force élastique.

3. Mécanisme d'amorçage selon la revendication 1, **caractérisé en ce que** l'élément de blocage (38) est réalisé d'une seule pièce avec l'élément de commande (40).

4. Mécanisme d'amorçage selon l'une quelconque des revendications précédentes, **caractérisé en ce que** la surface extérieure (28A) du boîtier, sur laquelle fait saillie la broche palpeuse (42), vient, lors de son montage dans le véhicule, en appui contre la partie de carrosserie de véhicule de sorte que la partie de la broche palpeuse (42) en saillie est enfoncée dans le perçage.

5. Mécanisme d'amorçage selon l'une quelconque des revendications 1 à 4, **caractérisé en ce que** dans le boîtier (28), la masse d'inertie (30) sensible au véhicule est montée de façon à pivoter et la rampe (36B) est orientée perpendiculairement au plan du mouvement de pivotement.

6. Mécanisme d'amorçage pour dispositifs de rétraction (10) d'un système de retenue à ceinture de sécurité ou pour des systèmes de retenue à coussin à gaz, comportant des pièces fonctionnelles agencées dans un boîtier (28), qui comprennent un dispositif de blocage (62, 64) pour bloquer la fonction de commande, ce dispositif de blocage (62, 64) étant inversable entre un état de blocage et un état de libération, et pour inverser le dispositif de blocage entre ses deux états, un élément de commande (40) en forme de broche faisant saillie à travers la cloison du boîtier (28) jusque dans ce dernier et exécutant une course d'actionnement pour l'inversion dans l'état de libération lorsque le boîtier (28) se rapproche d'une partie de la carrosserie du véhicule lors du montage du boîtier sur cette partie de la carrosserie du véhicule, l'élément de commande (40) en forme de broche étant monté coulissant clans un perçage du boîtier (28) et faisant saillie avec son extrémité libre (42) sur la surface extérieure du boîtier (28), cette extrémité libre (42) agissant directement en tant que broche palpeuse, **caractérisé en ce que** le dispositif de blocage (62, 64) contient un élément de blocage (64) agencé à l'intérieur du boîtier, lequel s'engage, à l'état bloqué, dans une configuration (62) formée sur la surface extérieure d'une masse d'inertie (30) sensible au véhicule, et en ce que par un déplacement en direction de la course d'actionnement de l'élément de commande (40), l'élément de blocage (38) est amené hors de l'état de blocage dans l'état de libération dans lequel il est maintenu en dehors de la course de mouvement de la configuration (62), et en ce que la masse d'inertie (30) sensible au véhicule est guidée de manière à se déplacer en translation et est pourvue de la configuration (62) orientée perpendiculairement à la direction de déplacement en translation et dans laquelle s'engage l'élément de blocage 64.

7. Mécanisme d'amorçage selon la revendication 6, **caractérisé en ce que** l'élément de blocage est un ressort à lame plat (64) qui, à une de ses extrémités, est monté par serrage dans le boîtier (28) et qui, avec son autre extrémité, s'engage dans une gorge (62) de la masse d'inertie (30).
